# EUROPEAN PATENT SPECIFICATION

(11) **EP 3 271 068 B1**
(45) Date of publication and mention of the grant of the patent: **22.12.2021**
(21) Application number: 16714001.1
(22) Date of filing: 15.03.2016
(51) Int. Cl.: B01J 20/22, B01J 20/26, B01J 20/28, B01J 20/30, B01D 53/02, F17C 11/00, C08G 61/02

(54) **A METHOD OF PREPARING A GAS-ADSORBING POROUS AROMATIC HYPER-CROSS-LINKED POLYMER**
VERFAHREN ZUR HERSTELLUNG EINES GASABSORBIERENDEN, PORÖSEN, AROMATISCHEN, HYPERVERZWEIGTEN POLYMERS
PROCÉDÉ DE PRÉPARATION D'UN POLYMÈRE HYPER-RÉTICULÉ AROMATIQUE POREUX POUR L'ADSORPTION DE GAZ

(30) Priority: 19.03.2015 EP 15425022
(43) Date of publication of application: 24.01.2018
(73) Proprietor: SOL S.p.A., 20900 Monza (MB) (IT)
(72) Inventor: MARCHESE, Leonardo, I-10095 Grugliasco (Torino) (IT); ERRAHALI, Mina, I-15121 Alessandria (IT); GATTI, Giorgio, I-15053 Castelnuovo Scrivia (Alessandria) (IT); TEI, Lorenzo, I-10126 Torino (IT); COSSI, Maurizio, I-56121 San Lorenzo alle Corti (Cascina) (Pisa) (IT); VALTOLINA, Daniele, I-23896 Sirtori (Lecco) (IT)
(74) Representative: Comoglio, Elena
(86) International application number: PCT/IB2016/051459
(87) International publication number: WO 2016/147116

(56) References cited:
- EP-A1- 2 450 390
- WO-A1-2015/011654
- M. ERRAHALI ET AL: "Microporous Hyper-Cross-Linked Aromatic Polymers Designed for Methane and Carbon Dioxide Adsorption", JOURNAL OF PHYSICAL CHEMISTRY C, vol. 118, no. 49, 11 December 2014 (2014-12-11), pages 28699-28710, XP055215342, ISSN: 1932-7447, DOI: 10.1021/jp5096695 & M Errahali ET AL: "Microporous Hyper-Crosslinked Aromatic Polymers Designed for Methane and Carbon Dioxide Adsorption-Supporting Information", Journal of Physical Chemistry C, 11 December 2014 (2014-12-11), pages 1-7, XP055215351, Retrieved from the Internet: URL:http://pubs.acs.org/doi/suppl/10.1021/ jp5096695/suppl_file/jp5096695_si_001.pdf [retrieved on 2015-09-22]
- TENG BEN ET AL: "Selective adsorption of carbon dioxide by carbonized porous aromatic framework (PAF)", ENERGY & ENVIRONMENTAL SCIENCE, vol. 5, no. 8, 9 May 2012 (2012-05-09), page 8370, XP055215339, ISSN: 1754-5692, DOI: 10.1039/c2ee21935b
- M Errahali ET AL: "Microporous Hyper-Crosslinked Aromatic Polymers Designed for Methane and Carbon Dioxide Adsorption-Supporting Information", Journal of Physical Chemistry C, 11 December 2014 (2014-12-11), pages 1-7, XP055215351, Retrieved from the Internet: URL:http://pubs.acs.org/doi/suppl/10.1021/ jp5096695/suppl_file/jp5096695_si_001.pdf [retrieved on 2015-09-22]

## Description

The present invention relates to a method of preparing a gas-adsorbing porous aromatic hyper-cross-linked polymer (HCP), particularly a hydrogen-, methane- and carbon dioxide- adsorbing HCP.

The continuous increase in world demand for energy, which occurred during the last decades, together with concerns about climate changes arising from carbon dioxide emissions associated with the use of coal, determined an acceleration of the efforts to facilitate the development and use of new energy technologies based on alternative sources, such as natural gas and hydrogen. There is therefore a strong interest in the development of new porous materials characterized by appropriate surface area and by nanometer pore size, which would be not only useful for optimal gas storage for energy and environmental applications, but also for applications in different fields such as molecular separations and catalysis.

Gas-adsorbing porous organic polymers are disclosed in the prior art. For example, a carbon dioxide (CO₂) -adsorbing microporous HCP, which is synthesized by cross-linking tetraphenylmethane with formaldehyde dimethyl acetal (FDA) in the presence of FeCl₃, is described in Dawson R. et al. Energy Environ. Sci., 2011, 4, 4239-4245. The crystalline polymeric material thereby obtained, which in the following will by designated as "Polymer E", is characterized by the presence of micro- and mesopores with sizes which do not render them particularly suitable for adsorbing hydrogen and methane on a wide range of pressure.

A porous polymeric material capable of adsorbing and storing carbon dioxide (CO₂) and hydrogen (H₂) as well as methane (CH₄) is the so-called PAF-1 *(porous aromatic frameworks*)*.* Its synthesis is described in Teng Ben et al., Angew. Chem. Int. Ed. 2009, 48, 9457-9460. Although also PAF-1 is synthesized starting from brominated tetraphenylmethane as the monomer, it chemically differs from the above-mentioned Polymer E in that its aromatic rings are directly linked with each other, while in Polymer E the aromatic rings are linked through methylene groups (-CH₂-).

Although PAF-1 is provided with good hydrogen, methane and carbon dioxide adsorbing properties as well as with a high surface area and good thermal and hydrothermal stability, it has remarkable economical and industrial disadvantages related to the expensive and difficult to scale-up method of synthesis.

A new method for preparing microporous polymers by using formaldehyde dimethyl acetal (FDA) as crosslinking agent to polymerize various aromatic monomers has been reported in Li, B.; Gong, R.; Wang, W.; Huang, X.; Zhang, W.; Li, H.; Hu, C.; Tan, B. A New Strategy to Microporous Polymers: Knitting Rigid Aromatic Building Blocks by External Cross-Linker. Macromolecules 2011, 44, 2410-2414.

Recently, the present inventors described the synthesis of four different gas-adsorbing porous HCPs by a Friedel-Crafts reaction, where the ratio of the tetraphenylmethane (TPM) monomer to the formaldehyde dimethyl acetal (FDA) cross-linking agent varied within the range from 1:3 to 1:30 (Errahali, M; Gatti, G; Tei, L; Paul, G; Rolla, G; Canti, L; Fraccarollo, A; Cossi, M; Comotti, A; Sozzani, P; Marchese, L. Microporous Hyper-crosslinked Aromatic Polymers Designed for Methane and Carbon Dioxide Adsorption, J. Phys. Chem. C, 2014, 118, 28699-28710). In the cited paper, the present inventors demonstrated that different TPM to FDA molar ratios result in HCPs having different surface area and porosity.

In WO 2015/011654, the present inventors disclosed the synthesis of a gas-adsorbing porous organic polymer containing ultramicropores, which is obtainable by a Friedel-Crafts reaction wherein a monomer to FDA molar ratio comprised within the range 1:9 to 1:30 is employed.

In an effort to provide a polymer material having improved gas-adsorbing properties, the present inventors conducted extensive studies on the effects of a number of synthesis conditions and post-synthesis treatments on the porosity of HCP materials synthesized from tetrahedral aromatic monomers and FDA cross-linking agent. Unexpectedly, they found that by performing a post-synthesis heat treatment at a specified temperature range, a remarkable increase in the amount of micropores and, more specifically, of ultramicropores in the synthesized polymer material is obtained, independently of the monomer to FDA molar ratio employed. In the present description, the term "ultramicropores" is intended to designate micropores having a pore size lower than 7 Å, consistently with the IUPAC classification. It is known that a high amount of ultramicropores makes a porous organic polymer material particularly suitable to adsorb and store gases such as carbon dioxide, hydrogen and methane at low to intermediate pressure.

Therefore, an object of the present invention is to provide a method of preparing a gas-adsorbing porous aromatic HCP having improved gas-adsorbing properties, the method being at the same time simple, cost-effective and easy to scale-up.

These and other objects are achieved by the method according to independent claim 1. The dependent claims define further features of the invention and form an integral part of the description.

The gas-adsorbing porous aromatic HCP prepared by the method of the present invention is useful for storing a gas selected from hydrogen, methane and/or carbon dioxide.

As it will be illustrated in more detail in the following description, the gas-adsorbing porous aromatic HCP prepared by the method of the invention contains a remarkable amount of ultramicropores which, thanks to their size, are particularly suitable for adsorbing and storing carbon dioxide, hydrogen and methane gases; in addition, it has an improved surface area. Furthermore, such polymer is obtainable by a preparation method which makes use of consumer solvents and catalysts and which is neither extremely expensive nor particularly difficult to scale-up. The advantageous and unexpected properties of the polymer prepared by the method of the present invention are demonstrated in particular in the experimental section of the present description, by comparison with polymers having the same chemical structure, obtained using the same reaction conditions but which have been subjected to a post-synthesis heat treatment at a lower temperature.

Further objectives, features and advantages will become apparent from the following detailed description. However, the detailed description and the specific examples, although indicating preferred embodiments of the invention, are provided by way of illustration only, since after their reading various changes and modifications, which are comprised within the scope of the invention, will become apparent to the person skilled in the art.

The preparation method of the invention comprises a synthesis step, wherein a Friedel-Crafts reaction is performed using a Friedel-Crafts catalyst, a tetrahedral monomer of general formula (I) as defined in the following, and formaldehyde dimethyl acetal (FDA) as the cross-linking agent.

After the synthesis step, the porous aromatic HCP is subjected to a heat treatment at a temperature which is comprised within the range from 350 to 380°C.

The present inventors, in fact, observed that by subjecting the synthesized polymer to a heat treatment at a temperature comprised within the range from 350 to 380°C, a remarkable increase in the amount of micropores, especially those having a pore size lower than 7 Å, is obtained along with a noticeable increase in the surface area (see Table 1 below).

According to a preferred embodiment of the method of the invention, the heat treatment is conducted for 1 to 72 hours.

According to another preferred embodiment of the method of the invention, a heating rate from 0.1 to 10 °C/min is applied during the heat treatment.

In still another preferred embodiment of the method of the invention, the heat treatment is conducted under gas flow, wherein the gas is preferably selected from N₂, Ar, O₂, and mixtures thereof, including e.g. air, or under vacuum.

The tetrahedral monomers, which are employed in the preparation method of the invention, have the formula (I) illustrated herein below: 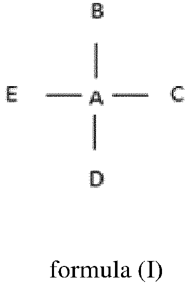 wherein A is selected from a C atom, a Si atom, a Ge atom, a Sn atom, an adamantane group, an ethane group and an ethene group, 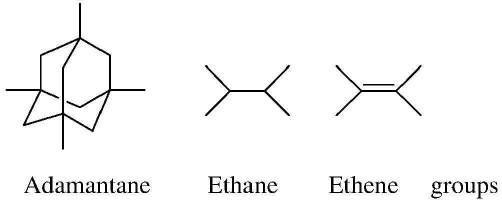 and wherein each of B, C, D and E is a 6-membered ring structure selected from the monovalent radicals of the compounds benzene, naphtalene, anthracene, phenanthrene, pyrene, optionally having one or more substituents selected from nitro, amino, hydroxyl, sulfonyl, halogen, phenyl, alkyl, haloalkyl, hydroxyalkyl, aminoalkyl, aryl, alkenyl and alkynyl groups.

In the formula (I) illustrated above, a halogen which is preferred as an optional substituent is fluorine; preferred alkyls as optional substituents are methyl, ethyl, propyl, butyl; preferred haloalkyls as optional substituents are chloromethyl, chloroethyl; preferred hydroxyalkyls as optional substituents are hydroxymethyl, hydroxyethyl; preferred aminoalkyls as optional substituents are aminomethyl, aminoethyl; preferred aryls as optional substituents are benzene, toluene, phenol, aniline, acetophenone, benzaldehyde, benzoic acid, o-xylene, m-xylene, p-xylene, benzonitrile, biphenyl; preferred alkenyls as optional substituents are ethenyl, propenyl, 1-methylethenyl, butenyl.

A preferred tetrahedral monomer for use in the method of the invention is a compound of formula (I) wherein each of the ring structures A, B, C, D and E is a monovalent radical of benzene optionally having one or more substituents as defined above. A particularly preferred tetrahedral monomer is tetraphenylmethane, wherein A is a carbon atom and each of A, B, C, D and E is an unsubstituted monovalent radical of benzene, that is to say a phenyl radical.

Examples of Friedel-Crafts catalysts suitable for use in the preparation method of the invention are BF₃, BeCl₂, TiCl₄, SbCl₅, SnCl₄, FeCl₃, AlCl₃, Sc(OTf)₃, Mo(CO)₆, SeCl₄, TeCl₄, sulfuric acid, hydrofluoric acid and superacids, such as for example HF·SbF or HSO₃ F·SbF₅. The most preferred catalyst is FeCl₃.

Aprotic organic solvents suitable for use in the method of the invention include both polar and non-polar solvents. Specific examples of solvents, provided by way of illustration only, are dichloroethane, toluene, benzene, nitromethane (CH₃NO₂), carbon disulfide and chlorobenzene. The most preferred solvent is dichloroethane.

Furthermore, the experimental results obtained by the inventors show that by using a monomer concentration in the organic solvent comprised within the range from 0.1 to 0.6 M, which is about 10-fold higher than the concentration disclosed in WO 2015/011654, a further increase in the amount of ultramicropores is advantageously obtained. Therefore, according to the method of the invention, the concentration of the monomer of formula (I) in the aprotic organic solvent is comprised within the range from 0.1 to 0.6 M.

The chemical structure of the porous polymer obtained by the method of the invention, which is characterized by an improved amount of ultramicropores, i.e. micropores having a pore size lower than 7 Å and improved BET surface area, is illustrated by the following general formula (II): 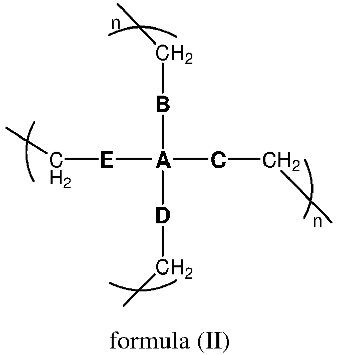 wherein A, B, C, D and E are as defined above in connection with formula (I) and wherein n is an integer preferably comprised between 200 and 6000.

A more detailed description of the structural features and the porosity of a preferred porous aromatic HCP prepared by the method of the present invention is provided in the following examples, with reference to the appended drawings, wherein:
figure 1 shows the N₂ adsorption-desorption isotherms at 77K (A) and pore size distribution (B) of a polymer (circles) used as reference material (Polymer E in Dawson R. et al. Energy Environ. Sci., 2011, 4, 4239-4245) and Polymer E-380 (triangles);
figure 2 shows the N₂ adsorption-desorption isotherms at 77K (A) and pore size distribution (B) of UPO-7 (circles) and UPO-8 (triangles);
figure 3 shows the N₂ adsorption-desorption isotherms at 77K (A) and pore size distribution (B) of UPO-9 (circles) and UPO-10 (triangles);
figure 4 shows the N₂ adsorption-desorption isotherms at 77K (A) and pore size distribution (B) of UPO-11 (circles) and UPO-12 (triangles);
figure 5 shows the N₂ adsorption-desorption isotherms at 77K (A) and pore size distribution (B) of UPO-13 (circles) and UPO-14 (triangles);
figure 6 shows the N₂ adsorption-desorption isotherms at 77K (A) and pore size distribution (B) of UPO-15 (circles) and UPO-16 (triangles);
figure 7 shows the N₂ adsorption-desorption isotherms at 77K (A) and pore size distribution (B) of UPO-17 (circles) and UPO-18 (triangles);
figure 8 shows the N₂ adsorption-desorption isotherms at 77K (A) and pore size distribution (B) of UPO-19 (circles) and UPO-20 (triangles).

The following examples are illustrative only and do not limit the scope of the invention as defined in the appended claims.

### Examples

### Example 1 (prior art)

Ferric chloride (25.85 g, 0.16 mol) and tetraphenylmethane (TPM 3.20 g, 0.01 mol) were suspended in dichloroethane (DCE, 240 mL). The resulting mixture was vigorously stirred at room temperature to obtain a clear solution, and then formaldehyde dimethylacetal (FDA, 12.23 g, 0.16 mol) was added dropwise. The resulting thick gel was stirred at room temperature for 4 hours and then heated to reflux for 17 hours. After cooling to room temperature, the gel was diluted with methanol and washed several times with water until the pH become neutral, and finally dried in an oven at 100 °C overnight.

The polymer thereby obtained is designated as "UPO-1" in WO 2015/011654 and as m-PAF-1/16 (microporous aromatic framework to emphasize the role of smaller pores) in Errahali, M; Gatti, G; Tei, L; Paul, G; Rolla, G; Canti, L; Fraccarollo, A; Cossi, M; Comotti, A; Sozzani, P; Marchese, L. Microporous Hyper-crosslinked Aromatic Polymers Designed for Methane and Carbon Dioxide Adsorption, J. Phys. Chem. C, 2014, 118, 28699-28710.

### Example 2

Starting from the procedure of Example 1, different precursor concentrations in the solvent, ranging between 0.6 and 0.001M, result in polymers having different porosity, which further changes after the post-synthesis thermal treatment.

The following general procedure is used for the thermal treatment. The polymer was heated at a temperature comprised between 160 and 500 °C for a time ranging between 1 and 72 h with a heating rate ranging between 0.1 to 10 °C/min under gas flow (N₂, Ar, O₂, mixtures N₂/O₂ or Ar/O₂, air) or under vacuum. As a result, not only the surface area and the total pore volume change, especially the ultramicropore volume, but also the pore size distribution.

Some specific examples of the synthesis procedure and the post-synthesis thermal treatment are provided herein below.

### UPO-7 and UPO-8:

Ferric chloride (4.055 g, 0.025 mol) and tetraphe nylmethane (TPM 1 g, 0.0031 mol) were suspended in dichloroethane (DCE, 135 mL). The resulting mixture was vigorously stirred at room temperature to obtain a homogeneous solution, then formaldehyde dimethylacetal FDA, (1.90 g, 0.025 mol) was added dropwise. The resulting thick gel was stirred at room temperature for 4 hours and then heated to reflux for 17 hours. After cooling to room temperature, the gel was diluted with ethanol and washed several times with water until the pH become neutral, and finally dried in an oven at 100 °C overnight. The sample was then outgassed at 150°C for the pore distribution analysis (sample named UPO-7).

Alternatively, the polymer dried at 100°C was heated at a temperature of 380 °C for 16 h with a heating rate of 2 °C/min, and then outgassed at 150 °C for the pore distribution analysis (sample named UPO-8).

### UPO-9 and UPO-10:

Ferric chloride (4.055 g, 0.025 mol) and tetraphenylmethane (TPM 1 g, 0.0031 mol) were suspended in dichloroethane (DCE, 13.5 mL). The resulting mixture was vigorously stirred at room temperature to obtain a homogeneous solution, then formaldehyde dimethylacetal FDA, (1.90 g, 0.025 mol) was added dropwise. The resulting thick gel was stirred at room temperature for 4 hours and then heated to reflux for 17 hours. After cooling to room temperature, the gel was diluted with ethanol and washed several times with water until the pH become neutral, and finally dried in an oven at 100 °C overnight. The sample was then outgassed at 150°C for the pore distribution analysis (sample named UPO-9).

Alternatively, the polymer dried at 100°C was heated at a temperature of 380 °C for 16 h with a heating rate of 2 °C/min, and then outgassed at 150 °C for the pore distribution analysis (sample named UPO-10).

### UPO-11 and UPO-12:

Ferric chloride (8.11, g 0.05 mol) and tetraphenylmethane (TPM 1 g, 0.0031 mol) were suspended in dichloroethane (DCE, 135 mL). The resulting mixture was vigorously stirred at room temperature to obtain a homogeneous solution, then formaldehyde dimethylacetal FDA, (3.8 g, 0.05 mol) was added dropwise. The resulting thick gel was stirred at room temperature for 4 hours and then heated to reflux for 17 hours. After cooling to room temperature, the gel was diluted with ethanol and washed several times with water until the pH become neutral, and finally dried in an oven at 100 °C overnight. The sample was then outgassed at 150°C for the pore distribution analysis (sample named UPO-11).

Alternatively, the polymer dried at 100°C was heated at a temperature of 380 °C for 16 h with a heating rate of 2 °C/min, and then outgassed at 150 °C for the pore distribution analysis (sample named UPO-12).

### UPO-13 and UPO-14:

Ferric chloride (8.11 g, 0.05 mol) and tetraphenylmethane (TPM 1 g, 0.0031 mol) were suspended in dichloroethane (DCE, 13.5 mL). The resulting mixture was vigorously stirred at room temperature to obtain a homogeneous solution, then formaldehyde dimethylacetal FDA, (3.8 g, 0.05 mol) was added dropwise. The resulting thick gel was stirred at room temperature for 4 hours and then heated to reflux for 17 hours. After cooling to room temperature, the gel was diluted with ethanol and washed several times with water until the pH become neutral, and finally dried in an oven at 100 °C overnight. The sample was then outgassed at 150°C for the pore distribution analysis (sample named UPO-13).

Alternatively, the polymer dried at 100°C was heated at a temperature of 380 °C for 16 h with a heating rate of 2 °C/min, and then outgassed at 150 °C for the pore distribution analysis (sample named UPO-14).

### UPO-15 and UPO-16:

Ferric chloride (19.46 g, 0.12 mol) and tetraphenylmethane (TPM 1 g, 0.0031 mol) were suspended in dichloroethane (DCE, 135 mL). The resulting mixture was vigorously stirred at room temperature to obtain a homogeneous solution, then formaldehyde dimethylacetal FDA, (9.13 g, 0.12 mol) was added dropwise. The resulting thick gel was stirred at room temperature for 4 hours and then heated to reflux for 17 hours. After cooling to room temperature, the gel was diluted with ethanol and washed several times with water until the pH become neutral, and finally dried in an oven at 100 °C overnight. The sample was then outgassed at 150°C for the pore distribution analysis (sample named UPO-15).

Alternatively, the polymer dried at 100°C was heated at a temperature of 380 °C for 16 h with a heating rate of 2 °C/min, and then outgassed at 150 °C for the pore distribution analysis (sample named UPO-16).

### UPO-17 and UPO-18:

Ferric chloride (19.46 g 0.12 mol) and tetraphenylmethane (TPM 1 g, 0.0031 mol) were suspended in dichloroethane (DCE, 13.5 mL). The resulting mixture was vigorously stirred at room temperature to obtain a homogeneous solution, then formaldehyde dimethylacetal FDA, (9.13 g, 0.12 mol) was added dropwise. The resulting thick gel was stirred at room temperature for 4 hours and then heated to reflux for 17 hours. After cooling to room temperature, the gel was diluted with ethanol and washed several times with water until the pH become neutral, and finally dried in an oven at 100 °C overnight. The sample was then outgassed at 150°C for the pore distribution analysis (sample named UPO-17).

Alternatively, the polymer dried at 100°C was heated at a temperature of 380 °C for 16 h with a heating rate of 2 °C/min, and then outgassed at 150 °C for the pore distribution analysis (sample named UPO-18).

### UPO-19 and UPO-20:

Ferric chloride (7.8 g, 0.048 mol) and tetraphenylethene (TPE 1 g, 0.003 mol) were suspended in dichloroethane (DCE, 135 mL). The resulting mixture was vigorously stirred at room temperature to obtain a homogeneous solution, then formaldehyde dimethylacetal FDA, (3.65 g, 0.048 mol) was added dropwise. The resulting thick gel was stirred at room temperature for 4 hours and then heated to reflux for 17 hours. After cooling to room temperature, the gel was diluted with ethanol and washed several times with water until the pH become neutral, and finally dried in an oven at 100 °C overnight. The sample was then outgassed at 150°C for the pore distribution analysis (sample named UPO-19).

Alternatively, the polymer dried at 100°C was heated at a temperature of 380 °C for 16 h with a heating rate of 2 °C/min, and then outgassed at 150 °C for the pore distribution analysis (sample named UPO-20).

### Example 3 (Polymer E, synthesis and subsequent thermal treatment)

Polymer E described in Dawson R. et al. Energy Environ. Sci., 2011, 4, 4239-4245 is used here as a reference material treated in the thermal conditions as described in Example 2.

### Polymer E and Polymer E - 380:

To a mixture of tetraphenylmethane (0.8 g, 0.0025 mol) and formaldehyde dimethyl acetal (1.52 g, 0.02 mol) was added 1,2-dichloroethane (5 mL). Iron(III) chloride (3.25 g, 0.02 mol) was added and the mixture heated to 80 °C under nitrogen overnight. After cooling the solid product was filtered off and washed with methanol until the filtrate turned clear.

The product was then Soxhlet extracted with methanol overnight after which the product was washed again with methanol and diethylether and dried in an oven at 100 °C overnight. The sample was then outgassed at 150°C for the pore distribution analysis (sample named Polymer E). Alternatively, the polymer dried at 100 °C was heated at a temperature of 380 °C for 16 h with a heating rate of 2 °C/min, and then outgassed at 150 °C for the pore distribution analysis (sample named Polymer E-380).

### N₂ physisorption at 77K

The textural analysis of both UPO-n and Polymer E samples before and after the thermal treatments were made by N₂ physisorption at 77K, with a relative pressures (P/Po) from 1×10⁻⁷ to 1. Before the analysis, the samples were outgassed at 150°C for 18 hours. The BET surface areas were calculated over a relative pressure range P/P₀ = 0.05―0.15, and pore size distribution were calculated using the procedure quenched solid density functional theory (QSDFT) on carbon surface with slit/cylindrical geometry applied in the adsorption branch.

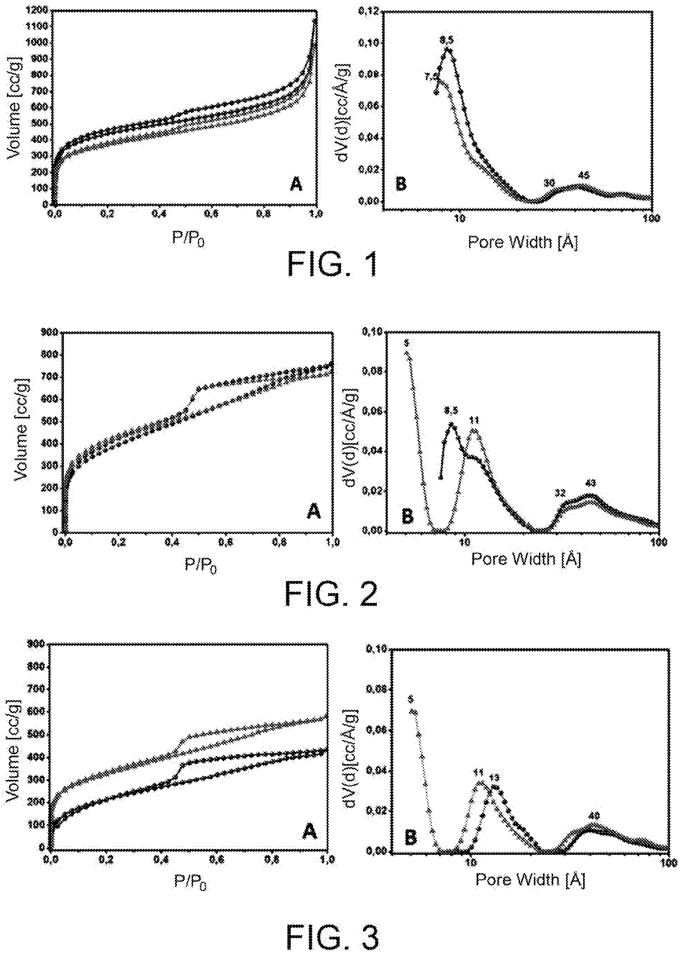

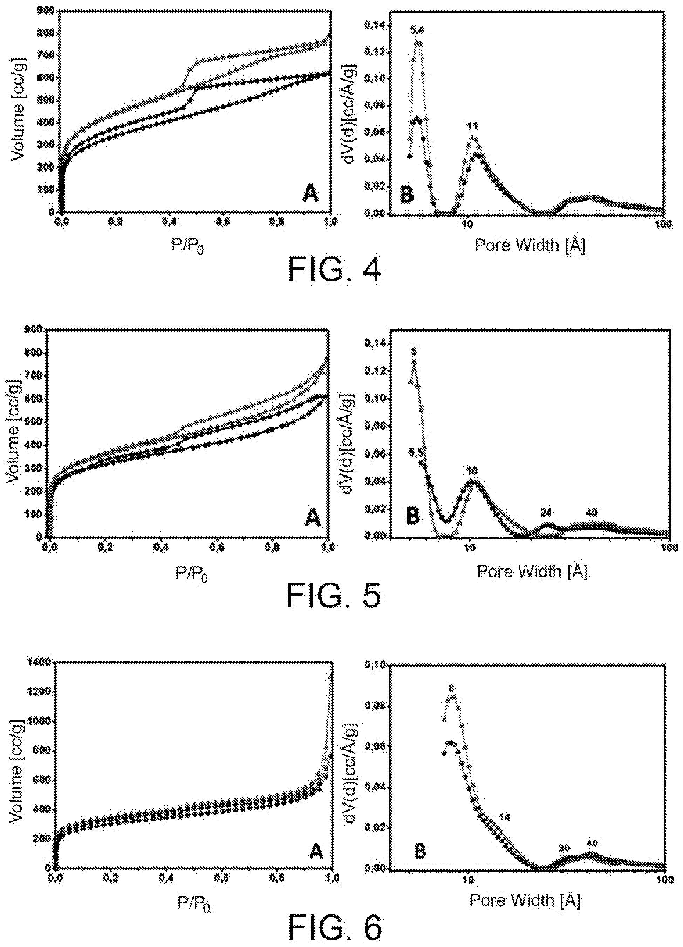

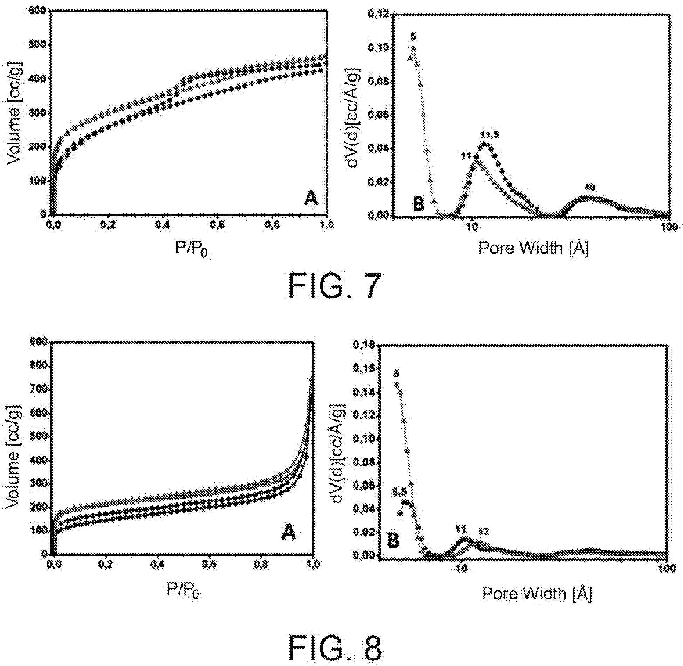

The physisorption isotherms (frames A) and pore size distributions (frames B) for both UPO and Polymer E samples, before (black circles) and after (black tringles) the thermal treatments are reported in figures 1-8.

All isotherms show large quantities of gas (100-300 cm³/g) adsorbed at low relative pressures. They also display a further gradual filling of mesopores at higher relative pressures P/Po in the range 0.45-1. The porous properties of the polymers are summarized in Table 1, where the BET surface areas range between 525 and 1528 m² g^{―1}.

It should be noted that the thermal treatment is always followed by an improvement in the BET surface area of the individual UPO-n polymers, whereas Polymer E behaves differently.

**Table 1. Composition, temperature treatments, surface properties and pore volume for UPO and Polymer E samples: a) Surface area calculated from the nitrogen adsorption isotherm using the BET method; b) Total pore volume at P/P₀=0.995; c) The micropore volume is determined using QSDFT method.**

| **Sample** | **Precursor** | **precursor :FDA (mol)** | **precursor conc in DCE (M)** | **Temperature treatment (°C)** | **SSA _{BET}^{(a)} [m²/g]** | **V _{TOTAL}^{(b)} [cc/g]** | **V _{MICRO}^{(c)} [cc/g]** | | |
|---|---|---|---|---|---|---|---|---|---|
| | | | | | | | **<7Å** | **7<Å<20** | **Total** |
| **Polyme r E** | TPM | 1:8 | 0.5 | 150 | 1586 | 1.20 | -- | 0.47 | 0.47 |
| **Polyme r E -380** | TPM | 1:8 | 0.5 | 380 | 1324 | 1.08 | -- | 0.37 | 0.37 |
| **UPO-7** | TPM | 1:8 | 0.02 | 150 | 1435 | 1.09 | -- | 0.31 | 0.31 |
| **UPO-8** | TPM | 1:8 | 0.02 | 380 | 1528 | 1.04 | 0.14 | 0.27 | 0.41 |
| **UPO-9** | TPM | 1:8 | 0.2 | 150 | 793 | 0.61 | -- | 0.18 | 0.18 |
| **UPO-10** | TPM | 1:8 | 0.2 | 380 | 1170 | 0.84 | 0.11 | 0.18 | 0.29 |
| **UPO-11** | TPM | 1:16 | 0.02 | 150 | 1232 | 0.90 | 0.09 | 0.22 | 0.31 |
| **UPO-12** | TPM | 1:16 | 0.02 | 380 | 1513 | 0.99 | 0.14 | 0.28 | 0.42 |
| **UPO-13** | TPM | 1:16 | 0.2 | 150 | 1169 | 0.85 | 0.09 | 0.2 | 0.29 |
| **UPO-14** | TPM | 1:16 | 0.2 | 380 | 1293 | 1.04 | 0.15 | 0.2 | 0.35 |
| **UPO-15** | TPM | 1:40 | 0.02 | 150 | 1107 | 0.88 | -- | 0.32 | 0.32 |
| **UPO-16** | TPM | 1:40 | 0.02 | 380 | 1289 | 1.04 | -- | 0.41 | 0.41 |
| **UPO-17** | TPM | 1:40 | 0.2 | 150 | 948 | 0.62 | -- | 0.25 | 0.25 |
| **UPO-18** | TPM | 1:40 | 0.2 | 380 | 1074 | 0.67 | 0.13 | 0.17 | 0.30 |
| **UPO-19** | TPE | 1:16 | 0.02 | 150 | 525 | 0.59 | 0.06 4 | 0.066 | 0.13 |
| **UPO-20** | TPE | 1:16 | 0.02 | 380 | 777 | 0.67 | 0.19 | 0.05 | 0.24 |

Most of the samples, after the thermal treatment, have undergone a change of the pores distribution leading to the appearance of ultramicropores of about 5Å.

The reference material Polymer E shows an opposite behavior: after the thermal treatment both surface area and micropore volume decrease. All polymers treated at a temperature of 150°C are not according with the invention.

Substantially the same results are obtained by performing the thermal treatments at temperatures comprised within the range of 350°C to 380°C.

### Conclusions

These results show that the thermal treatment between 350°C to 380°C, a range of temperature in which the framework is maintained, leads to increase BET surface area, total pore volume and micropore volume (in particular, the ultramicropore volume) of the UPO-n samples, which is important to increase the gas uptake capacity of the porous materials. Polymer E described in the literature (Dawson R. et al. Energy Environ. Sci., 2011, 4, 4239-4245) shows an opposite behavior.

## Claims

1. A method of preparing a gas-adsorbing porous aromatic hyper-cross-linked polymer (HCP), comprising a synthesis step in which a monomer of formula (I): 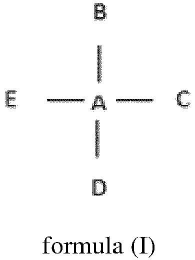
wherein A is selected from a C atom, a Si atom, a Ge atom, a Sn atom, an adamantane group, an ethane group and an ethene group,
and wherein each of B, C, D and E is a 6-membered ring structure selected from the monovalent radicals of the compounds benzene, naphtalene, anthracene, phenanthrene, pyrene, optionally having one or more substituents selected from nitro, amino, hydroxyl, sulfonyl, halogen, phenyl, alkyl, haloalkyl, hydroxyalkyl, aminoalkyl, aryl, alkenyl and alkynyl groups,
is reacted with a Friedel-Crafts catalyst in an aprotic organic solvent and with formaldehyde dimethyl acetal (FDA) as the cross-linking agent, wherein the concentration of the monomer of formula (I) in the aprotic organic solvent is comprised within the range from 0.1 to 0.6 M and wherein the monomer of formula (I):FDA molar ratio is comprised within the range from 1:3 to 1:40,
said method of preparing comprising a further step subsequent to said synthesis step, wherein the porous organic polymer obtained upon said synthesis step is subjected to a heat treatment at a temperature comprised within the range of from 350 to 380°C.

2. The method according to claim 1, wherein the heat treatment is conducted for 1 to 72 hours.

3. The method according to claim 2, wherein a heating rate from 0.1 to 10 °C/min is applied during the heat treatment.

4. The method according to any of claims 1 to 3, wherein the aprotic organic solvent is selected from the group consisting of dichloroethane (DCE), toluene, benzene, nitromethane (CH₃NO₂), carbon disulfide and chlorobenzene.

5. The method according to claim 4, wherein the aprotic organic solvent is dichloroethane (DCE).

6. The method according to any of claims 1 to 5, wherein the Friedel-Crafts catalyst is selected from the group consisting of BF₃, BeCl₂, TiCl₄, SbCls, SnCl₄, FeCl₃, AlCl₃, Sc(OTf)₃, Mo(CO)₆, SeCl₄, TeCl₄, sulfuric acid, hydrofluoric acid and super acids.

7. The method according to claim 6, wherein the catalyst is FeCl₃.

8. The method according to any of claims 1 to 7, wherein each of B, C, D and E in formula (I) is a monovalent radical of benzene optionally bearing one or more substituents from nitro, amino, hydroxyl, sulfonyl, halogen, phenyl, alkyl, haloalkyl, hydroxyalkyl, aminoalkyl, aryl, alkenyl and alkynyl groups.

9. The method according to any of claims 1 to 8, wherein the monomer of formula (I) is tetraphenylmethane.

## Patentansprüche

1. Verfahren zur Herstellung eines gas-adsobierenden, porösen, aromatischen, hyperquervernetzen Polymers (HCP), enthaltend einen Syntheseschritt, in dem ein Monomer nach Formel (I): 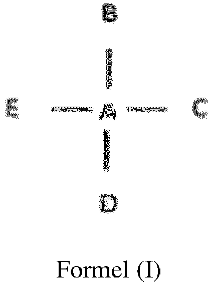
wobei A ausgewählt ist aus einem C-Atom, einem Si-Atom, einem Ge-Atom, einem Sn-Atom, einer Adamantangruppe, einer Ethangruppe und einer Ethengruppe,
wobei B, C, D und E jeweils eine sechsgliedrige Ringstruktur ausgewählt aus den monovalenten Radikalen der Verbindungen Benzol, Naphtalen, Anthrazen, Phenanthren, Pyren, die optional einen oder mehrere Substituenten ausgewählt aus der Gruppe aus Nitro-, Amino-, Hydroxy-, Sulfonyl-, Halogen-, Phenyl-, Alkyl-, Haloalkyl-, Hydroxyalkyl-, Aminoalkyl-, Aryl-, Alkenyl-, und Alkinylgrguppen haben,
mit einem Friedel-Crafts-Katalysator in einem aprotischen organischen Lösemittel und mit Formaldehyddimethylacetal (FDA) als Vernetzunggsmittel reagiert wird, wobei die Konzentration des Monomers nach Formal (I) in dem aprotischen organischen Lösemittel in der Spanne von 0,1 bis 0,6 M enthalten ist und wobei der Monomer nach Formel (I):FDA molare Quotient in der Spanne von 1:3 bis 1:40 enthalten ist,
wobei das Verfahren zur Herstellung einen weiteren Schritt anschließend an den Syntheseschritt enthält, wobei das poröse, organische Polymer, das aus dem Syntheseschritt gewonnen wird,
weiter einer Hitzebehandlung bei einer Temperatur, die in der Spanne von 350 bis 380 °C enthalten ist, ausgesetzt wird.

2. Verfahren nach Anspruch 1, wobei die Hitzebehandlung für 1 bis 72 Stunden durchgeführt wird.

3. Verfahren nach Anspruch 2, wobei eine Erwärmungsrate von 0,1 bis 10 °C/min während der Hitzebehandlung angewendet wird.

4. Verfahren nach einem der Ansprüche 1 bis 3, wobei das aprotische organische Lösemittel ausgewählt ist aus der Gruppe bestehend aus Dichloroethan (DCE), Toluol, Benzol, Nitromethan (CH₃NO₂), Kohlenstoffdisulfid und Chlorobenzol.

5. Verfahren nach Anspruch 4, wobei das aprotische organische Lösemittel Dichloroethan (DCE) ist.

6. Verfahren nach einem der Ansprüche 1 bis 5, wobei der Friedel-Crafts-Katalysator ausgewählt ist aus der Gruppe bestehend aus BF₃, BeCl₂, TiCl₄, SbCl₅, SnCl₄, FeCl₃, AlCl₃, Sc(OTf)₃, Mo(CO)₆, SeCl₄, TeCl₄, Schwefelsäure, Flusssäure und Supersäuren.

7. Verfahren nach Anspruch 6, wobei der Katalysator FeCl₃ ist.

8. Verfahren nach einem der Ansprüche 1 bis 7, wobei B, C, D und E in Formel (I) jeweils ein monovalentes Radikal von Benzol optional einen oder mehrere Substituenten aus Nitro-, Amino-, Hydroxy-, Sulfonyl-, Halogen-, Phenyl-, Alkyl-, Haloalkyl-, Hydroxyalkyl-, Aminoalkyl-, Aryl-, Alkenyl- und Alkinylgruppen tragend sind.

9. Verfahren nach einem der Ansprüche 1 bis 8, wobei das Monomer nach Formel (I) Tetraphenylmethan ist.

## Revendications

1. Procédé de préparation d'un polymère hyper-réticulé (HCP) aromatique poreux adsorbant les gaz, comprenant une étape de synthèse dans laquelle un monomère de formule (I) : 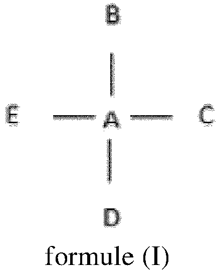
dans lequel A est sélectionné parmi un atome C, un atome Si, un atome Ge, un atome Sn, un groupe adamantane, un groupe éthane et un groupe éthène,
et dans lequel chacun parmi B, C, D et E est une structure cyclique à 6 chaînons sélectionnée parmi les radicaux monovalents des composés benzène, naphtalène, anthracène, phénanthrène, pyrène, ayant facultativement un ou plusieurs substituants sélectionnés parmi les groupes nitro, amino, hydroxyle, sulfonyle, halogène, phényle, alkyle, haloalkyle, hydroxyalkyle, aminoalkyle, aryle, alcényle et alcynyle,
est mis à réagir avec un catalyseur de Friedel-Crafts dans un solvant organique aprotique et avec du formaldéhydediméthyl-acétal (FDA) en tant qu'agent de réticulation, dans lequel la concentration du monomère de formule (I) dans le solvant organique aprotique est comprise dans la plage allant de 0,1 à 0,6 M et dans lequel le rapport molaire monomère de formule (I):FDA est compris dans la plage allant de 1:3 à 1:40,
ledit procédé de préparation comprenant une étape supplémentaire postérieure à ladite étape de synthèse, dans lequel le polymère organique poreux obtenu lors de ladite étape de synthèse est soumis à un traitement thermique à une température comprise dans la plage allant de 350 à 380 °C.

2. Procédé selon la revendication 1, dans lequel le traitement thermique est effectué pendant 1 à 72 heures.

3. Procédé selon la revendication 2, dans lequel une vitesse de chauffage de 0,1 à 10 °C/min est appliquée lors du traitement thermique.

4. Procédé selon l'une quelconque des revendications 1 à 3, dans lequel le solvant organique aprotique est sélectionné dans le groupe constitué du dichloroéthane (DCE), du toluène, du benzène, du nitrométhane (CH₃NO₂), du sulfure de carbone et du chlorobenzène.

5. Procédé selon la revendication 4, dans lequel le solvant organique aprotique est le dichloroéthane (DCE).

6. Procédé selon l'une quelconque des revendications 1 à 5, dans lequel le catalyseur de Friedel-Crafts est sélectionné dans le groupe constitué du BF₃, BeCl₂, TiCl₄, SbCls, SnCl₄, FeCl₃, AlCl₃, Sc(OTf)₃, Mo(CO)₆, SeCl₄, TeCl₄, de l'acide sulfurique, de l'acide fluorhydrique et des super acides.

7. Procédé selon la revendication 6, dans lequel le catalyseur est FeCl₃.

8. Procédé selon l'une quelconque des revendications 1 à 7, dans lequel chacun parmi B, C, D et E dans la formule (I) est un radical monovalent de benzène portant facultativement un ou plusieurs substituants parmi les groupes nitro, amino, hydroxyle, sulfonyle, halogène, phényle, alkyle, haloalkyle, hydroxyalkyle, aminoalkyle, aryle, alcényle et alcynyle.

9. Procédé selon l'une quelconque des revendications 1 à 8, dans lequel le monomère de formule (I) est le tétraphénylméthane.
